# FASCICULE DE BREVET EUROPEEN

(11) **EP 1 350 743 B1**
(45) Date de publication et mention de la délivrance du brevet: **07.06.2006**
(21) Numéro de dépôt: 03290535.8
(22) Date de dépôt: 23.12.1999
(51) Int. Cl.: B65G 53/14, B05C 11/10

(54) **Procédé et dispositif de remplissage automatique d'un bac chauffant avec un produit solide**
Verfahren und Vorrichtung zum automatischen Abfüllen eines festen Produktes in einen heissen Behälter
Method and device for automatically filling a hot container with a solid product

(30) Priorité: 29.12.1998 FR 9816781
(43) Date de publication de la demande: 08.10.2003
(62) Demande divisionnaire de: 99403257.1
(73) Titulaire: NORDSON CORPORATION, Westlake, OH 44145 (US)
(72) Inventeur: Boudin, Jean-Pierre, 45560 Saint Denis en Val (FR)
(74) Mandataire: Findlay, Alice Rosemary

(56) Documents cités:
- EP-A- 0 164 436
- EP-A- 0 562 219
- GB-A- 1 210 267
- US-A- 3 773 069
- US-A- 4 441 450

## Description

La présente invention concerne un dispositif de remplissage d'un bac chauffant avec un produit solide.

La présente invention concerne plus particulièrement un procédé et un dispositif de remplissage d'un bac à colle d'une machine à déposer de la colle "Hot Melt".

Il est connu des machines permettant de déposer de la colle à haute température de fusion, appelé communément colle 'Hot Melt'. Ces machines comportent un bac à colle qui est chauffé entre 120 et 200°C afin de maintenir la colle en phase liquide. Les bacs à colle 'Hot Melt' possèdent généralement un couvercle commandé manuellement. La mise à niveau ou le remplissage de ces bacs nécessite d'ouvrir manuellement le couvercle puis de déposer une dose de colle sous forme de pains ou de granulés. La température intérieure du bac étant très importante, cette opération s'avère très dangereuse et doit être répétée fréquemment dans le cas d'une utilisation intensive du générateur de colle.

Des dispositifs d'approvisionnement automatiques existent sous forme de tiroir ou de volets commandés par des vérins ou des artifices mécaniques. Ces dispositifs possèdent de nombreux inconvénients en raison de la proximité du bac. En effet, des particules de colle ou de la vapeur de colle s'intègrent rapidement dans les mécanismes du dispositif d'approvisionnement et bloquent ceux-ci. Tout dysfonctionnement nécessite une intervention humaine dans des conditions dangereuses et difficiles. De plus, lorsque le générateur de colle n'est pas utilisé, le refroidissement de la colle interdit toute intervention dans le bac ou les mécanismes d'approvisionnement puisque ceux-ci sont complètement immobilisés par la colle.

La présente invention a donc pour objet de pallier les inconvénients de l'art antérieur en proposant un procédé de remplissage d'un bac chauffant avec un produit solide qui soit simple et efficace et dont la mise en oeuvre est sans risques pour l'opérateur.

Le document US 3773069 décrit un distributeur d'adhésif ramollissant à la chaleur, sous forme de granulés, comportant une trémie pour recevoir les granulés d'adhésif, une chambre pour faire ramollir à la chaleur les granulés d'adhésif en provenance de la trémie, un récipient pour recevoir l'adhésif ramolli provenant de la chambre, et une pompe pour fournir de l'adhésif en provenance du récipient, comme souhaité. La trémie présente des moyens pour distribuer des quantités prédéterminées de granulés d'adhésif dans la chambre. La chambre pour faire ramollir l'adhésif à la chaleur présente des passages se rétrécissant progressivement, entre des éléments chauffés, pour chauffer l'adhésif et, de préférence, un piston pour appuyer l'adhésif dans les passages. Une commande réagissant au niveau d'adhésif dans le récipient active les moyens de fourniture de la trémie, et la chambre pour chauffer l'adhésif.

Ce but est atteint par le fait que le procédé de remplissage automatique d'un bac chauffant avec un produit solide se caractérise en ce que le procédé permet de transférer, par un chemin de transfert, le produit solide sous forme de granulés ou de poudre d'un lieu de stockage vers le bac chauffant contenant le produit chauffé et fluidisé et qu'il comprend les étapes suivantes :
- une étape de formation d'une zone chaude permanente débouchant verticalement dans le bac chauffant et de réalisation d'une zone d'isolation thermique entre le chemin de transfert reliant le lieu de stockage du produit solide à la zone chaude au-dessus du bac chauffant ;
- une étape de transfert d'une dose déterminée de produit solide sur détection d'un signal correspondant à un niveau minimum déterminé de produit dans le bac chauffant.

Selon une autre particularité, l'étape de transfert s'effectue par soufflage pendant un temps déterminé correspondant à la dose de produit ;

Selon une autre particularité, l'étape de transfert est suivie d'une étape de neutralisation du signal pendant un temps déterminé.

Selon une autre particularité, la zone d'isolation thermique est obtenue par un flux constant d'air à contre courant du flux de vapeur chaude de produit.

Un deuxième but de l'invention est de proposer un dispositif de remplissage d'un bac chauffant avec un produit solide qui soit simple et efficace et dont la manipulation est sans risques pour l'opérateur.

Ce but est atteint par le fait que le dispositif de remplissage automatique d'un bac chauffant en produit solide se caractérise en ce qu'il comprend des moyens d'approvisionnement en produit solide connecté à un moyen de distribution et des moyens de contrôle permettant de contrôler les moyens d'approvisionnement en fonction du niveau de produit dans le bac, le moyen de distribution, de forme déterminée, étant assemblé par sa partie inférieure sur le bac chauffant et comprend un ou plusieurs moyens permettant de réaliser une zone d'isolation thermique dans sa partie supérieure.

Selon une autre particularité, les moyens d'approvisionnement comprennent une cuve d'approvisionnement en forme d'entonnoir reliée à une première ouverture d'un raccord en T, un tube connecté à une source d'air comprimé est relié à une deuxième ouverture du raccord en T perpendiculaire à la première, un tuyau d'approvisionnement, relié à la troisième ouverture du raccord en T, disposé en vis-à-vis de la deuxième, établit la connexion avec le moyen de distribution.

Selon une autre particularité, le tube relié à la deuxième ouverture du raccord en T présente une extrémité en sifflet dont la disposition à l'intérieur du raccord en T est déterminée de telle sorte que le flux d'air provenant du tube soit canalisé principalement dans l'axe de la troisième ouverture en direction du tuyau d'approvisionnement et permette d'aspirer le produit de la cuve d'approvisionnement.

Selon une autre particularité, les moyens de contrôle commandent l'ouverture d'une électrovanne intercalée entre la source d'air comprimé et le raccord en T, sur réception d'un signal émis par un capteur relié aux moyens de contrôle et positionné dans le bac chauffant lors d'un niveau déterminé de produit dans le bac.

Selon une autre particularité, les moyens de contrôle comprennent un premier moyen de temporisation ou temporisateur d'expédition qui permet de maintenir l'électrovanne ouverte pendant une durée déterminée correspondant à une dose de produit transférée dans le bac chauffant.

Selon une autre particularité, les moyens de contrôle comprennent un deuxième moyen de temporisation ou temporisateur de niveau de produit dans le bac qui permet d'occulter le signal émis par le capteur pendant une durée déterminée lorsqu'une dose de produit vient d'être transférée.

Selon une autre particularité, une bonbonne, constituant une réserve d'air, est intercalée entre l'électrovanne et la source d'air comprimé afin de fournir une forte impulsion à l'ouverture de l'électrovanne pour permettre de propulser le produit présent dans le raccord en T.

Selon une autre particularité, le moyen de distribution est constitué d'un conduit de forme variable pourvu de perforations à sa périphérie dans une zone située en dessous de l'extrémité supérieure et dont l'extrémité supérieure est reliée directement ou indirectement au tuyau d'approvisionnement, l'extrémité inférieure se prolongeant radialement vers l'extérieur par un rebord circulaire pour former une embase permettant d'assembler le conduit en vis-à-vis d'une ouverture de la surface supérieure du bac chauffant, un tube se prolongeant à l'intérieur du conduit permet d'amener un flux d'air constant à proximité de l'extrémité supérieure du conduit afin de créer la zone d'isolation.

Selon une autre particularité, l'extrémité supérieure du conduit se prolonge par un raccord, coudé ou non, connecté au tuyau d'approvisionnement, le tube amenant le flux d'air étant solidaire de ce raccord.

Selon une autre particularité, la paroi interne du conduit comporte un déflecteur permettant de canaliser le produit injecté et d'optimiser l'efficacité de la zone d'isolation, et/ou la paroi externe du conduit comporte un déflecteur permettant d'optimiser l'efficacité de la zone d'isolation.

Selon une autre particularité, le moyen de distribution est constitué d'un conduit de forme variable dont l'extrémité inférieure se prolonge radialement vers l'extérieur par un rebord circulaire pour former une embase permettant d'assembler le conduit en vis-à-vis d'une ouverture de la surface supérieure du bac chauffant, et dont l'extrémité supérieure est reliée au raccord, coudé ou non, connecté au tuyau d'approvisionnement, un tube solidaire du raccord permet d'amener un flux d'air constant dans le raccord, celui-ci possédant des perforations permettant l'évacuation de l'air diffusé par le tube.

Selon une autre particularité, le tube amenant le flux d'air se prolonge dans le conduit ou uniquement dans le raccord et possède des trous permettant de diffuser l'air dans l'ensemble de la zone d'isolation.

Selon une autre particularité, le conduit est constitué d'une tôle perforée.

Selon une autre particularité, le tube est connecté à la source en air comprimé, un limiteur de débit est intercalé entre la source et le tube pour contrôler le flux d'air introduit dans le conduit.

Selon une autre particularité, l'embase est assemblée sur une platine, l'ouverture délimitée par l'extrémité inférieure du conduit étant en vis-à-vis d'une ouverture de la platine dont les dimensions sont supérieures à l'ouverture du conduit et inférieures à l'ouverture de la surface supérieure du bac chauffant sur laquelle la platine est assemblée.

Un troisième but de l'invention est de proposer une utilisation du dispositif de remplissage selon l'invention

Ce but est atteint par le fait que le dispositif selon l'invention est utilisé pour remplir un bac à colle d'une machine permettant de déposer de la colle avec de la colle sous forme de granulés.

D'autres particularités et avantages de la présente invention apparaîtront plus clairement à la lecture de la description ci-après faite en référence aux dessins annexés dans lesquels :
- la figure 1 représente une vue schématique du dispositif de remplissage selon l'invention ;
- la figure 2 représente un agrandissement de la figure 1, des moyens d'approvisionnement du dispositif de remplissage ;
- la figure 3 représente un agrandissement de la figure 1, du moyen de distribution, disposé sur le bac à colle, du dispositif de remplissage ;
- les figures 4a et 4b représentent une vue en coupe de deux variantes d'un deuxième mode de réalisation du moyen de distribution ;
- la figure 5 représente un troisième mode de réalisation du moyen de distribution ;
- les figures 6a 6b et 6c représentent une vue en coupe de trois variantes d'un quatrième mode de réalisation du moyen de distribution

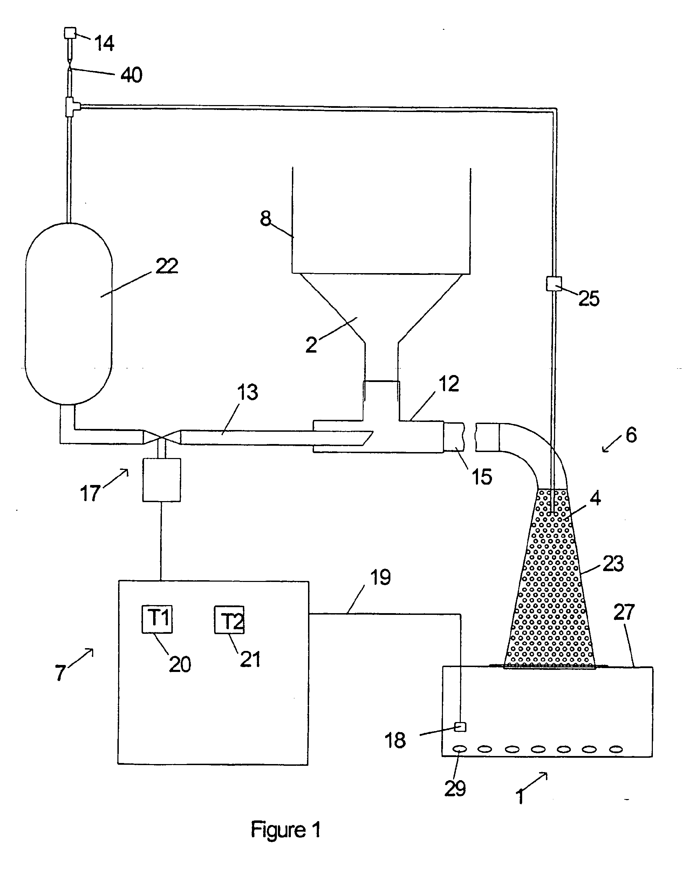

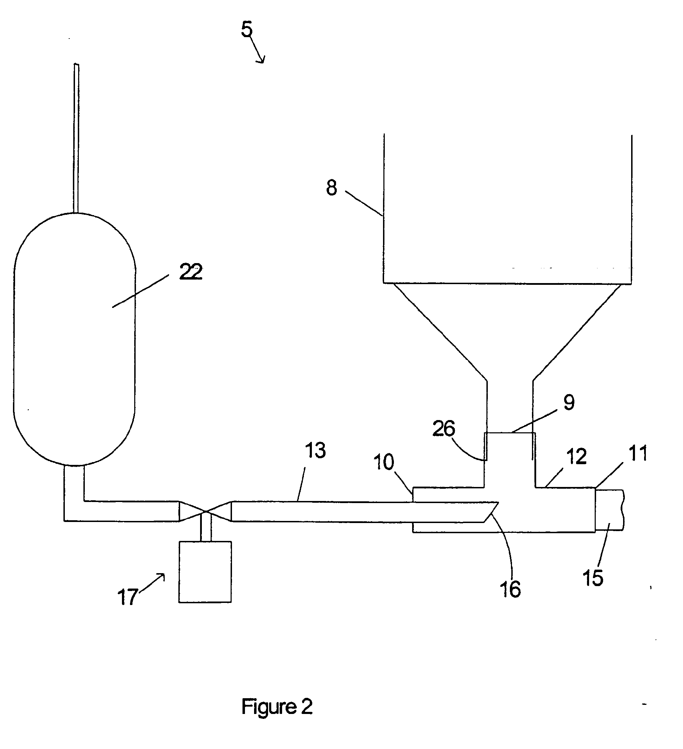

En référence aux figures 1, 2 et 3, le dispositif selon l'invention comprend un moyen de distribution (6), des moyens d'approvisionnement (5) du produit solide (2) à introduire dans le bac chauffant (1). A titre d'exemple, le produit solide est de la colle et le dispositif décrit ci-après permet de remplir un bac chauffant ou bac à colle (2) d'une machine permettant de déposer de la colle.

Les moyens d'approvisionnement (5) comprennent une cuve d'approvisionnement (8) pouvant accueillir la colle (2) sous forme solide tel que des granulés. Cette cuve (8) a la forme d'un entonnoir qui peut être chargée en colle par le haut et se vider par son extrémité inférieure (26). L'extrémité inférieure (26) de la cuve d'approvisionnement (8) est assemblée, dans une première ouverture (9) d'un raccord en T (12), perpendiculairement aux deux autres ouvertures (10, 11) du raccord en T. L'extrémité (16) en sifflet d'un tube (13), appelé ci-après tube en sifflet (13), est introduit par une deuxième ouverture (10) du raccord en T (12). Le tube en sifflet (13) est connecté à une source (14) d'air comprimé. Cette alimentation en air comprimé peut être réalisée par le réseau en air comprimé de l'entreprise qui est généralement de 6 bars. L'arrivée de l'air est commandée par une électrovanne (17). Une bonbonne (22), de 2,5 litres par exemple, peut être intercalée entre l'électrovanne (17) et la source d'air comprimé (14). Un tube d'approvisionnement (15) est connecté à la troisième ouverture (11) du raccord T (12) et au moyen de distribution (6). La position du tube en sifflet (13) dans le raccord en T est déterminée de telle sorte que le flux d'air comprimé amené par le tube en sifflet ne remonte pas verticalement en direction de la cuve d'approvisionnement (8) par la première ouverture (9) du raccord en T (12), mais soit canalisé principalement dans l'axe de la troisième ouverture (11) en direction du tuyau d'approvisionnement (15). Lorsque l'électrovanne (17) est fermée, les granulés de colle (2) descendent par gravité dans le raccord en T. La réserve d'air comprise dans la bonbonne (22) permet de donner une impulsion très importante dès l'ouverture de l'électrovanne (17). Cette forte impulsion de départ permet de déboucher le raccord en T (12) rempli de granulés de colle. Les granulés de colle sont ensuite aspirés de la cuve d'approvisionnement par le flux d'air comprimé constant et propulsés vers le tuyau d'approvisionnement (15).

Le bac à colle (1), par exemple de forme parallélépipédique, comporte quatre parois latérales, un fond et une surface supérieure (27) munie d'une ouverture (28). Le bac à colle comporte des moyens de chauffage (29), constitués, par exemple, de résistances positionnées dans la partie inférieure du bac. Selon un premier mode de réalisation, le moyen de distribution (6) comprend un conduit (23) constitué d'un tronc de cône, l'extrémité (28) dite supérieure délimite la plus petite ouverture du tronc de cône et l'autre extrémité dite inférieure (29) délimite la grande ouverture. Ce conduit (23) est appelé ci-après cône de distribution. Le cône de distribution (23) est constitué d'une tôle, inox par exemple, perforée au moins sur sa partie supérieure. Les perforations (30) sont par exemple circulaires. Le diamètre des perforations est inférieur aux dimensions des granulés de colle. L'extrémité supérieure (28) du cône de distribution (23) se prolonge par un raccord coudé, par exemple en inox, appelé coude (31). L'extrémité (32) du coude est reliée à la troisième ouverture (11) du raccord en T par le tube d'approvisionnement (15). Le diamètre du coude (31) inox peut correspondre sensiblement à celui du tuyau d'approvisionnement (115). L'extrémité inférieure (29) ou la base du cône de distribution peut se prolonger radialement vers l'extérieur par un rebord circulaire formant une embase (33). L'embase (33) du cône de distribution permet l'assemblage de celui-ci sur le bac à colle (1), en vis-à-vis de l'ouverture (28) de la surface supérieure (27) du bac à colle (1). A titre d'exemple, une platine (34), spécifique à chaque type de bac à colle (1), est positionnée sur la surface supérieure (27) du bac à colle. La platine est constituée d'une plaque parallélépipédique d'un matériau isolant à la chaleur. Cette platine (34) remplace le couvercle généralement positionné sur ce type de bac à colle (1). Deux brides (35), solidaires de la surface supérieure du bac peuvent assurer l'assemblage de la platine (34) sur le bac à colle. La platine peut comprendre une poignée positionnée sur un côté latéral afin de permettre sa manipulation sans risque. La platine (34) possède une ouverture (36), par exemple circulaire, disposée sensiblement au centre de la platine. L'embase (33) du cône (23) est positionnée sur la platine en étant centrée sur l'ouverture (36) de la platine (34). Deux brides (37), solidaires de la surface supérieure (27) de la platine, peuvent assurer l'assemblage du cône sur la platine. Ainsi un moyen de distribution peut être assemblé sur différents types de bac en utilisant une platine adaptée à chaque type de bac.

Un tube (39), solidaire du coude, est disposé dans le cône parallèlement à l'axe (AA') du cône de distribution. Ce tube est alimenté en air et permet d'amener un filet d'air permettant de créer une zone dite d'isolation dans la partie supérieure du cône. L'espace intérieur du cône peut ainsi être séparé en deux parties, une partie supérieure dite zone d'isolation (4) et une partie inférieure dite zone chaude (38) ou Hot Melt. Le tube est muni de trous de petit diamètre, en nombre suffisant pour permettre une diffusion de l'air dans l'ensemble de la zone d'isolation. Les perforations du cône permettent l'évacuation de l'air diffusé par les trous du tube. A titre d'exemple, le tube se prolonge à l'extérieur du cône et est connecté à la source (14) d'air comprimé. Le circuit d'alimentation en air comprimé du moyen de distribution et du tube en sifflet positionné dans le raccord en T peut être fermé manuellement au moyen d'une même vanne (40). Le filet d'air amené par le tube (39) dans le cône peut être réglé par un limiteur (25) de débit, intercalé entre la source (14) et le tube. Le filet d'air, pouvant s'évacuer par les perforations (30) du cône permet d'assurer dans la zone d'isolation une température proche de la température ambiante, de l'ordre de 20° C. Le filet d'air est mis en place dès la mise en route des moyens de chauffage du bac à colle et est maintenu pendant toute la durée d'utilisation du bac à colle. Il peut également être maintenu après l'utilisation du bac à colle, jusqu'à refroidissement et solidification de la colle contenue dans le bac. Il crée une isolation thermique entre la zone chaude (38) et le chemin de transfert des granulés reliant la cuve (8) au cône de distribution. La zone d'isolation thermique forme une barrière aux vapeurs de colle provenant du bac à colle. Le filet d'air empêche les granulés de colle de fondre au niveau de la zone d'isolation ou en amont, le long du chemin de transfert. Il élimine ainsi tous risques de colmatage. Les granulés, amenés dans le cône par soufflage, sont projetés en direction du bac à colle. La forme et les dimensions du cône et les perforations (30) assurent l'élimination de l'air ce qui évite tout rebondissement des granulés ou éclaboussures. La paroi extérieure du cône (23) peut comporter une collerette (3a) ou déflecteur, disposé perpendiculairement à l'axe (AA') du cône (23). Ce déflecteur permet de mieux définir la limite entre la zone d'isolation (4) et la zone chaude (38) ou 'Hot Melt' et d'améliorer l'efficacité de la zone d'isolation. Selon une variante, le déflecteur est positionné à l'intérieur du cône. Un déflecteur (3b) possède alors une forme de tronc de cône ou d'entonnoir et est alors fixé à la surface intérieure du cylindre par son extrémité délimitant l'ouverture la plus grande, la petite ouverture du déflecteur étant orientée vers l'ouverture du cylindre délimitée par son extrémité inférieure. Ce deuxième type de déflecteur permet d'une part de mieux définir la limite entre la zone d'isolation (4) et la zone chaude (38) ou 'Hot Melt' et d'améliorer l'efficacité de la zone d'isolation, et d'autre part de canaliser les granulés de colle arrivant par le coude. Le cône peut bien entendu comporter les deux types de déflecteur (3a, 3b).

Des moyens de contrôle (7) permettent de commander l'ouverture et la fermeture de l'électrovanne (17). Un capteur (18) est positionné dans le bac à colle (1) et permet de détecter un niveau déterminé de colle dans le bac. Ce capteur (17) est relié (19) aux moyens de contrôle (7), et émet un signal d'alarme vers les moyens de contrôle (7) pour un niveau de colle déterminé correspondant au niveau minimum de colle souhaité dans la cuve. Ainsi, lorsque le capteur (18) détecte un niveau minimum, les moyens de contrôle commandent l'ouverture de l'électrovanne (17) afin de transférer par soufflage les granulés du bac d'approvisionnement au bac de colle. Les moyens de contrôle (7) comprennent un premier moyen de temporisation (20), appelé temporisation d'expédition qui permet de maintenir l'électrovanne (17) ouverte pendant une durée déterminée (T1) correspondant à une dose déterminée de granulés. A titre d'exemple, l'électrovanne (17) est maintenue ouverte pendant une durée (T1) de 3 secondes, correspondant à une dose de granulés de 100 à 200 grammes.

Les moyens de contrôle (7) peuvent comprendre un deuxième moyen de temporisation (21), appelé temporisation de niveau de produit dans le bac, qui permet, lorsqu'une dose de granulés vient d'être transférée, d'occulter un éventuel signal d'alarme du capteur (18) pendant une durée déterminée (T2), afin de maintenir l'électrovanne (17) fermée. Cette temporisation, par exemple de une minute, correspond sensiblement à la durée nécessaire à la dose de granulés venant d'être transférée, pour fondre convenablement et se répartir de façon homogène dans tout le bac (1). Il permet ainsi de savoir si la dernière dose propulsée permet de dépasser le niveau minimum. L'utilisation de deux moyens de temporisation tels que décrits précédemment permet de remplir la cuve en plusieurs fois sans perturber l'utilisation du bac à colle.

Le dispositif selon l'invention permet de positionner la cuve d'approvisionnement (8) loin du bac chauffant de colle, à une distance proportionnelle à la longueur du tube d'approvisionnement. L'opérateur peut ainsi charger la cuve de granulés sans risques. Cette étape de chargement constitue l'unique intervention de l'opérateur pour permettre le remplissage du bac chauffant.

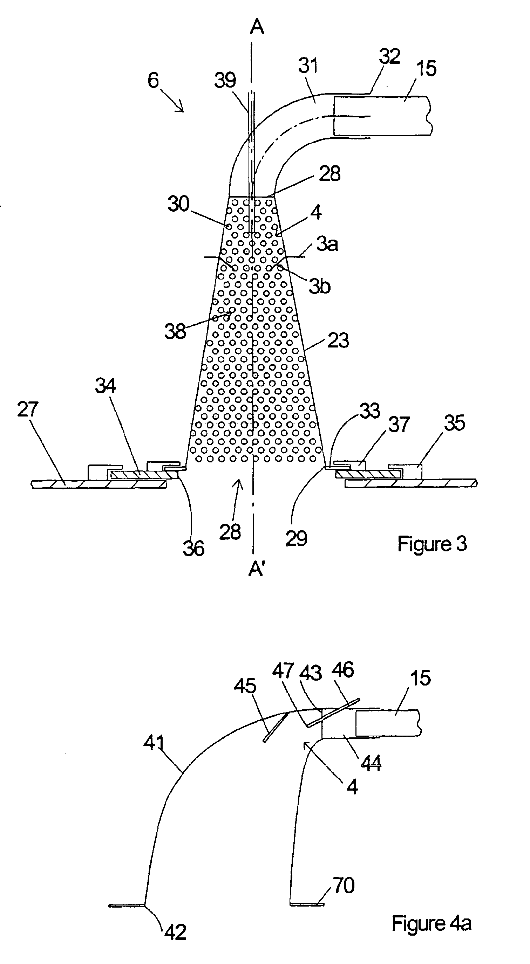

Selon un deuxième mode de réalisation d'un moyen de distribution et en référence à la figure 4a, le cône est remplacé par un conduit (41), dit arrondi, dont l'extrémité inférieure (42) de section rectangulaire ou carrée est perpendiculaire à l'extrémité supérieure (43) de section carrée. Les dimensions de l'extrémité inférieure (43) sont supérieures à celles de l'extrémité supérieure (42). Le conduit arrondi (41) est constitué d'une tôle perforée ou grillage. L'extrémité inférieure (42) se prolonge par un rebord formant une embase (70). Cette embase permet d'assembler le conduit arrondi (41) sur la surface supérieure d'un bac à colle. L'extrémité supérieure (43) se prolonge par un raccord constitué d'un tube à section carrée, appelé tube carré (44) au bout duquel est fixé le tuyau d'approvisionnement (15).

La surface intérieure du conduit arrondi présente un déflecteur (45) disposé de telle sorte qu'il puisse orienter les granulés de colle amenés par le tuyau d'approvisionnement (15) vers l'extrémité inférieure (42) du conduit arrondi (41). Un petit tube (46), solidaire du tube carré (44), permet de créer la zone d'isolation (4). Le tube d'arrivée d'air est disposé incliné à l'intérieur du tube carré, son extrémité (47) étant positionnée entre le déflecteur et l'extrémité supérieure (43) du tube arrondi. Le tube comporte de multiples trous permettant de diffuser l'air dans l'ensemble de la zone d'isolation. Le tube se prolonge en dehors du tube carré et est connecté à la source d'air comprimé. La forme et les dimensions du conduit arrondi sont définies pour permettre une élimination de l'air et un écoulement efficaces des granulés.

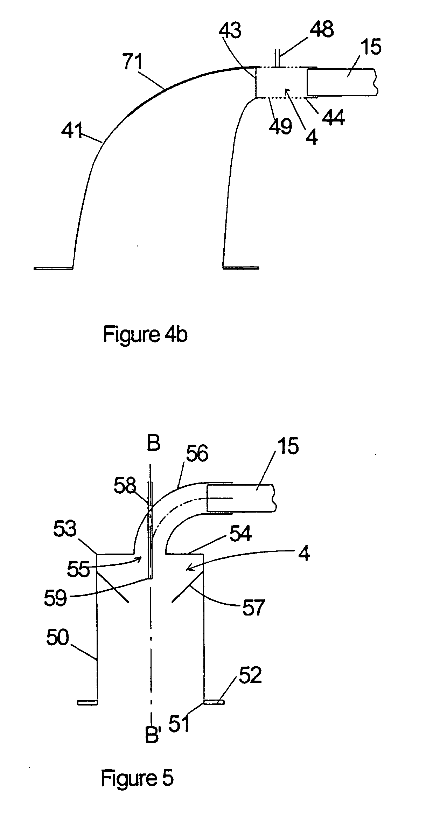

Selon une variante du deuxième mode de réalisation et en référence à la figure 4b, le tube arrondi (41) ne comporte pas de déflecteur mais possède une partie (71) non perforée disposée en vis-à-vis du tuyau d'approvisionnement (15). Cette partie (71) non perforée se prolonge jusqu'à l'extrémité supérieure (43) du tube arrondi. Un petit tube (48) relié à une arrivée d'air, solidaire du tube carré, permet d'amener un filet d'air dans le tube carré (44) mais ne pénètre pas dans celui-ci. Le tube carré possède de multiples trous (49) permettant l'évacuation de l'air amené par le petit tube. L'espace intérieur du tube carré constitue alors la zone d'isolation (4).

Selon un troisième mode de réalisation et en référence à la figure 5, le moyen de distribution est constitué d'un cylindre (50) formé d'une tôle perforée ou grillage. L'extrémité inférieure (51) du cylindre se prolonge vers l'extérieur par un rebord formant une embase (52). L'extrémité supérieure (53) du cylindre est fermée par une paroi supérieure (54). La paroi supérieure (54) comporte une ouverture circulaire (55) centrée selon l'axe (BB') du cylindre. Un raccord coudé ou coude (56), en inox par exemple, est fixé par une de ses extrémités sur la paroi supérieure (54) du cylindre, l'ouverture du coude délimité par cette extrémité étant positionnée en vis-à-vis de l'ouverture (55) de la paroi supérieure (54). Le diamètre intérieur du coude est sensiblement égal à celui de l'ouverture de la paroi supérieure. Le coude est connecté par son autre extrémité au tuyau d'approvisionnement (15). Un déflecteur (57) en forme de tronc de cône ou d'entonnoir est fixé à la surface intérieure du cylindre par son extrémité délimitant l'ouverture la plus grande, la petite ouverture du déflecteur étant orientée vers l'ouverture du cylindre délimitée par son extrémité inférieure. La zone d'isolement (4) positionnée au-dessus du déflecteur est formée par un petit tube (58) relié à une source d'air. Le petit tube peut comporter de multiples trous permettant la diffusion de l'air. L'extrémité du tube (59) est positionnée dans le cylindre au-dessus de la petite ouverture du déflecteur (57). Le petit tube (58) peut être solidaire du coude (56) et être disposé parallèlement à l'axe (BB') du cylindre.

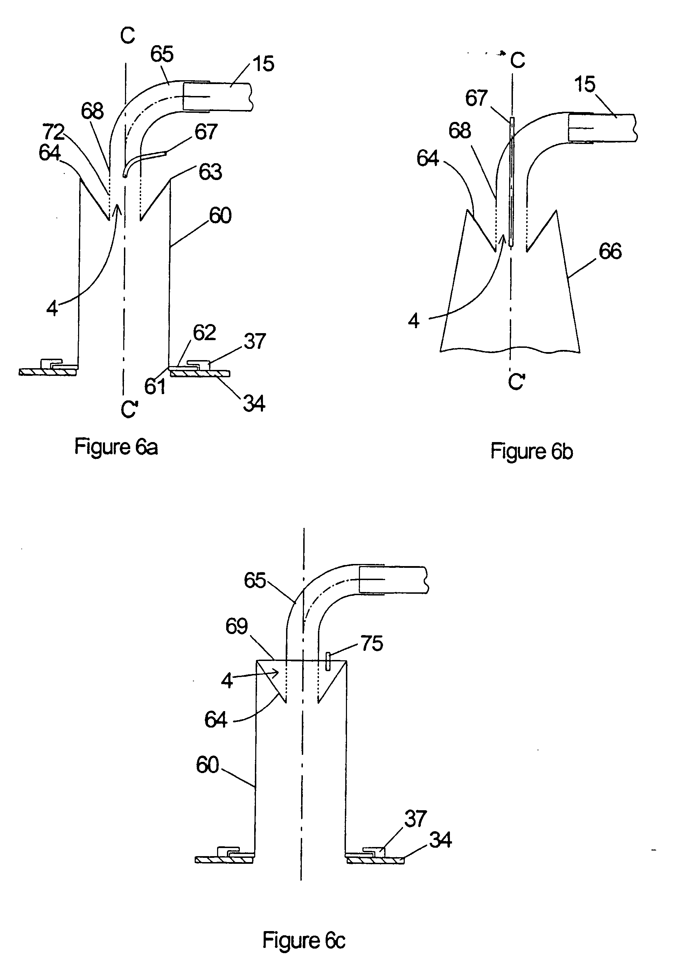

Selon un quatrième mode de réalisation et en référence à la figure 6a, le moyen de distribution est constitué d'un cylindre formé (60) d'une tôle perforée ou d'un grillage. L'extrémité inférieure (61) du cylindre se prolonge vers l'extérieur par un rebord formant une embase (62). Le cylindre comprend une paroi supérieure (64) en forme d'entonnoir, fixée à l'extrémité supérieure (63) du cylindre par son extrémité définissant l'ouverture la plus grande, la petite ouverture étant orientée vers l'ouverture du cylindre délimitée par son extrémité inférieure (61). Un raccord coudé ou coude cylindrique (65) est fixé par une de ses extrémités à l'extrémité de la paroi supérieure définissant la petite ouverture. L'autre extrémité du coude (65) est connectée au tuyau d'approvisionnement (15). Selon une variante et suivant la figure 6b, le cylindre est remplacé par un conduit (66) constitué d'un tronc de cône, l'extrémité du conduit délimitant l'ouverture la plus petite correspondant alors à l'extrémité supérieure du cylindre. Un petit tuyau (67), solidaire du coude (65), est disposé dans le coude parallèlement à l'axe (CC') du conduit (66), tel que représenté à la figure 6b, ou sensiblement perpendiculaire à l'axe (CC') du conduit (60), tel que représenté à la figure 6a. Dans ce dernier cas, l'extrémité du tube peut être courbée parallèlement à l'axe (CC') du conduit, de telle sorte que le flux d'air soit orienté en direction de l'ouverture du conduit (60) délimitée par son extrémité inférieure (61). L'extrémité du petit tube (67, 68) est disposée au-dessus de la petite ouverture de la paroi supérieure (64). Le petit tube peut comporter de multiples trous permettant la diffusion de l'air. La paroi du coude comporte, en périphérie du petit tube, de multiples perforations (72) permettant l'évacuation de l'air diffusé par le petit tube. Une zone d'isolation (4) est ainsi formée au-dessus de la petite ouverture de la paroi supérieure (64) du conduit. Selon une variante et en référence à la figure 6c, le moyen de distribution, tel que représenté à la figure 6a ou 6b, comporte une paroi (69) supplémentaire perpendiculairement à l'axe du cylindre et fermant l'extrémité supérieure du cylindre, le petit tube (75) d'arrivée d'air étant cette fois-ci solidaire de cette paroi supplémentaire. Les perforations du coude sont comprises entre la paroi supplémentaire et la petite ouverture du déflecteur. La zone d'isolation est alors constituée par l'espace compris entre la paroi supplémentaire et la paroi en forme d'entonnoir (64).

Les différents moyens de distribution, décrits dans le deuxième, troisième et quatrième modes de réalisation, peuvent être assemblés au bac à colle par leur embase de manière similaire à celle décrite pour le premier mode de réalisation, en utilisant une platine.

Le dispositif selon l'invention peut être utilisé pour remplir un bac chauffant avec tous types de produits solides sous forme de granulés ou poudre afin de liquéfier le produit par chauffage, avec l'addition d'un solvant ou non.

Il est clair que d'autres modifications à la portée de l'homme du métier entrent dans le cadre de l'invention.

## Revendications

1. Dispositif de remplissage d'un bac chauffant (1) en produit adhésif solide (2), le produit solide étant contenu dans un bac d'approvisionnement (8) et étant délivré du bac d'approvisionnement (8) vers le bac chauffant (1) par un moyen de distribution (6), **caractérisé en ce que** le moyen de distribution (6) comprend une zone d'isolation thermique.

2. Dispositif selon la revendication 1, **caractérisé en ce qu'**un tube (39) introduit de l'air comprimé dans le moyen de distribution (6).

3. Dispositif selon la revendication 2, **caractérisé en ce qu'**il comprend en outre un limiteur (25) de débit contrôlant le flux d'air dans le tube (39).

4. Dispositif selon la revendication 2 ou 3, **caractérisé en ce que** le moyen de distribution (6) comporte un membre (23) à travers lequel passe le produit solide, le membre comportant des perforations (30) pour permettre le passage de l'air de l'intérieur du membre (23) à travers les perforations (23) vers l'extérieur du membre (23), le tube (39) étant disposé à l'intérieur du membre (23).

5. Dispositif selon la revendication 4, **caractérisé en ce que** le membre (23) est un cône (23) ayant un diamètre plus petit à son extrémité supérieure et un diamètre plus large à son extrémité inférieure.

6. Dispositif selon une des revendications 1 à 5, **caractérisé en ce qu'**il comprend en outre un tube (13) à air comprimé disposé en dessous du bac d'approvisionnement (8) pour transporter le produit solide dans le moyen de distribution (6).

7. Dispositif selon la revendication 6, **caractérisé en ce qu'**il comprend en outre une bonbonne (22) d'air comprimé reliée entre le tube (13) à air comprimé et la source (14) d'air comprimé.

8. Dispositif selon la revendication 6 ou 7, **caractérisé en ce qu'**il comprend en outre un coude (31) entre le tube (13) à air comprimé et le moyen de distribution (6).

9. Dispositif selon la revendication 7 ou 8, **caractérisé en ce que** le bac chauffant (1) comprend en outre un capteur (18) qui détecte le niveau d'adhésif dans le bac chauffant (1) et contrôle le flux d'air à travers le tube (13) à air comprimé pour transporter le produit solide par le moyen de distribution (6) et dans le bac chauffant (1).

10. Dispositif selon la revendication 9, **caractérisé en ce qu'**il comprend en outre une vanne (17) entre la bonbonne (22) et le tube (13) à air comprimé, ladite vanne étant contrôlée par le capteur (18).

11. Dispositif selon la revendication 1, dans lequel le moyen de distribution comprend un membre d'isolation thermique (6) monté entre le bac d'approvisionnement (8) et le bac chauffant (1).

12. Dispositif selon la revendication 11, **caractérisé en ce que** le membre (6) d'isolation thermique comprend en outre une source (39) d'air comprimé.

13. Dispositif selon la revendication 11 ou 12, **caractérisé en ce que** le membre (6) d'isolation thermique comprend en outre un cône perforé (23).

14. Dispositif selon une des revendications 11 à 13, **caractérisé en ce qu'**il comprend en outre un tube (13) à air comprimé disposé en dessous du bac d'approvisionnement (8) pour transporter le produit solide dans le moyen de distribution (6).

15. Dispositif selon une des revendications 11 à 14, **caractérisé en ce que** le bac d'approvisionnement (8) comporte une extrémité inférieure (26) à travers laquelle le produit adhésif solide est déversé du bac d'approvisionnement (8), et **en ce que** le tube (13) à air comprimé comporte une extrémité (16) disposée en dessous de l'extrémité inférieure (26).

16. Dispositif selon la revendication 15, **caractérisé en ce que** l'extrémité inférieure (26) du bac d'approvisionnement (8) est disposée dans une première ouverture (9) d'un raccord en T (12) perpendiculaire aux deux autres ouvertures (10, 11) du raccord en T.

17. Dispositif selon la revendication 16, **caractérisé en ce que** le tube (13) à air comprimé est disposé dans la seconde ouverture (10) du raccord en T.

18. Dispositif selon la revendication 16 ou 17, **caractérisé en ce qu'**il comprend en outre un tuyau d'approvisionnement (15) relié entre la troisième ouverture (11) du raccord en T et le moyen de distribution (6).

## Claims

1. Device for filling a heating tank (1) with a solid adhesive product (2), the solid product being contained in a supply vat (8) and being supplied from the supply vat (8) to the heating tank (1) by a distribution means (6), **characterised in that** the distribution means (6) comprises a thermal insulation zone.

2. Device according to claim 1, **characterised in that** a tube (39) introduces compressed air into the distribution means (6).

3. Device according to claim 2, **characterised in that** it comprises furthermore a flow limiter (25) controlling the air flow into the tube (39).

4. Device according to claim 2 or 3, **characterised in that** the distribution means (6) comprises a member (23) through which the solid product passes, the member including perforations (30) for permitting the passage of air from the interior of the member (23) through the perforations (23) to the exterior of the member (23), the tube (39) being disposed inside the member (23).

5. Device according to claim 4, **characterised in that** the member (23) is a cone (23) having a smaller diameter at its upper end and a wider diameter at its lower end.

6. Device according to one of the claims 1 to 5, **characterised in that** it comprises furthermore a compressed air tube (13) which is disposed below the supply vat (8) in order to transport said solid product into the distribution means (6).

7. Device according to claim 6, **characterised in that** it comprises furthermore a compressed air cylinder (22) which is connected between the compressed air tube (13) and the compressed air source (14).

8. Device according to claim 6 or 7, **characterised in that** it comprises furthermore an elbow (31) between the compressed air tube (13) and the distribution means (6).

9. Device according to claim 7 or 8, **characterised in that** the heating tank (1) includes furthermore a sensor (18) which detects the level of adhesive in the heating tank (1) and controls the air flow through the compressed air tube (13) in order to transport the solid product by the distribution means (6) and into the heating tank (1).

10. Device according to claim 9, **characterised in that** it comprises furthermore a valve (17) between the cylinder (22) and the compressed air tube (13), said valve being controlled by the sensor (18).

11. Device according to claim 1, in which the distribution means comprises a thermal insulation member (6) which is mounted between the supply vat (8) and the heating tank (1).

12. Device according to claim 11, **characterised in that** the thermal insulation member (6) comprises furthermore a compressed air source (39).

13. Device according to claim 11 or 12, **characterised in that** the thermal insulation member (6) comprises furthermore a perforated cone (23).

14. Device according to one of the claims 11 to 13, **characterised in that** it comprises furthermore a compressed air tube (13) which is disposed below the supply vat (8) in order to transport the solid product into the distribution means (6).

15. Device according to one of the claims 11 to 14, **characterised in that** the supply vat (8) comprises a lower end (26) through which the solid adhesive product is diverted from the supply vat (8) and **in that** the compressed air tube (13) comprises an end (16) which is disposed below the lower end (26).

16. Device according to claim 15, **characterised in that** the lower end (26) of the supply vat (8) is disposed in a first opening (9) of a T-connector (12) perpendicular to the two other openings (10, 11) of the T-connector.

17. Device according to claim 16, **characterised in that** the compressed air tube (13) is disposed in the second opening (10) of the T-connector.

18. Device according to claim 16 or 17, **characterised in that** it comprises furthermore a supply pipe (15) which is connected between the third opening (11) of the T-connector and the distribution means (6).

## Patentansprüche

1. Vorrichtung zum Füllen eines Heizbehälters (1) mit einem festen Klebstoff (2), wobei der feste Stoff in einem Vorratbehälter (8) enthalten ist und von diesem Vorratbehälter (8) zum Heizbehälter (1) über Verteilungsmittel (6) geführt wird, **dadurch gekennzeichnet, dass** die Verteilungsmittel (6) einen Bereich thermischer Isolierung aufweist.

2. Vorrichtung nach Anspruch 1, **dadurch gekennzeichnet, dass** ein Rohr (39) Pressluft in die Verteilungsmittel (6) leitet.

3. Vorrichtung nach Anspruch 2, **dadurch gekennzeichnet, dass** sie darüber hinaus einen Durchsatzbegrenzer (25) umfasst, der die Luftströmung im Rohr (39) steuert.

4. Vorrichtung nach einem der Ansprüche 2 oder 3, **dadurch gekennzeichnet, dass** das Verteilungsmittel (6) ein Glied (23) aufweist, durch welches der Feststoff läuft, wobei dieses Glied Lochungen (30) umfasst, um das Strömen der Luft vom Inneren des Gliedes (23) durch die Lochungen (23) nach außerhalb des Gliedes (23) zu ermöglichen, wobei das Rohr (39) innerhalb des Gliedes (23) liegt.

5. Vorrichtung nach Anspruch 4, **dadurch gekennzeichnet, dass** das Glied (23) ein Kegel (23) ist, mit dem kleineren Durchmesser am oberen Ende und dem größeren Durchmesser am unteren Ende.

6. Vorrichtung nach einem der Ansprüche 1 bis 5, **dadurch gekennzeichnet, dass** sie darüber hinaus ein Pressluftrohr (13) umfasst, das unterhalb des Vorratbehälters (8) angebracht ist, um das feste Produkt in das Verteilungsmittel (6) zu befördern.

7. Vorrichtung nach Anspruch 6, **dadurch gekennzeichnet, dass** sie darüber hinaus eine Pressluftflasche (22) umfasst, die zwischen dem Pressluftrohr (13) und der Pressluftquelle (14) angebracht ist.

8. Vorrichtung nach einem der Ansprüche 6 oder 7, **dadurch gekennzeichnet, dass** sie darüber hinaus eine Biegung (31) zwischen dem Pressluftrohr (13) und dem Verteilungsmittel (6) aufweist.

9. Vorrichtung nach einem der Ansprüche 7 oder 8, **dadurch gekennzeichnet, dass** der Heizbehälter (1) darüber hinaus einen Fühler (18) aufweist, der den Klebstoffpegel im Heizbehälter (1) erfasst und den Luftstrom durch das Pressluftrohr (13) steuert, um den Feststoff durch das Verteilungsmittel (6) zum Heizbehälter (1) zu befördern.

10. Vorrichtung nach Anspruch 9, **dadurch gekennzeichnet, dass** sie darüber hinaus ein Ventil (17) zwischen der Flasche (22) und dem Pressluftrohr (13) umfasst, wobei das Ventil vom Fühler (18) gesteuert wird.

11. Vorrichtung nach Anspruch 1, in der das Verteilungsmittel ein thermisches Isolierglied (6) umfasst, das zwischen dem Vorratbehälter (8) und dem Heizbehälter (1) angebracht ist.

12. Vorrichtung nach Anspruch 11, **dadurch gekennzeichnet, dass** das thermische Isolierglied (6) darüber hinaus eine Pressluftquelle (39) umfasst.

13. Vorrichtung nach einem der Ansprüche 11 oder 12, **dadurch gekennzeichnet, dass** das thermische Isolierglied (6) darüber hinaus einen gelochten Kegel (23) umfasst.

14. Vorrichtung nach einem der Ansprüche 11 bis 13, **dadurch gekennzeichnet, dass** sie darüber hinaus ein Pressluftrohr (13) umfasst, das unterhalb des Vorratbehälters (8) angebracht ist, um das feste Produkt in das Verteilungsmittel (6) zu befördern.

15. Vorrichtung nach einem der Ansprüche 11 bis 14, **dadurch gekennzeichnet, dass** der Vorratbehälter (8) ein unteres Ende (26) aufweist, durch das der feste Klebstoff aus dem Vorratbehälter (8) gekippt wird und **dadurch**, dass das Pressluftrohr (13) ein unter dem unteren Ende (26) angebrachtes Ende (16) aufweist.

16. Vorrichtung nach Anspruch 15, **dadurch gekennzeichnet, dass** das untere Ende (26) des Vorratbehälters (8) in einer ersten Öffnung (9) eines T-Anschlussstücks (12) untergebracht ist, das senkrecht zu den zwei anderen Öffnungen (10, 11) dieses T-Anschlussstücks steht.

17. Vorrichtung nach Anspruch 16, **dadurch gekennzeichnet, dass** das Pressluftrohr (13) in der zweiten Öffnung (10) des T-Anschlussstücks angebracht ist.

18. Vorrichtung nach einem der Ansprüche 16 oder 17, **dadurch gekennzeichnet, dass** sie darüber hinaus ein Zufuhrrohr (15) aufweist, das zwischen der dritten Öffnung (11) des T-Anschlussstücks und dem Verteilungsmittel (6) eingesetzt ist.
